# EUROPÄISCHE PATENTSCHRIFT

(11) **EP 0 533 789 B1**
(45) Veröffentlichungstag und Bekanntmachung des Hinweises auf die Patenterteilung: **07.12.1994**
(21) Anmeldenummer: 91911452.0
(22) Anmeldetag: 06.06.1991
(51) Int. Cl.: G11B 20/12, G11B 20/10

(54) **RECORDER FÜR DIGITALE SIGNALE**
RECORDER FOR DIGITAL SIGNALS
ENREGISTREUR DE SIGNAUX NUMERIQUES

(30) Priorität: 09.06.1990 DE 4018605
(43) Veröffentlichungstag der Anmeldung: 31.03.1993
(73) Patentinhaber: Deutsche Thomson-Brandt GmbH, 78003 Villingen-Schwenningen (DE)
(72) Erfinder: SCHOLZ, Werner, D-3007 Gehrden (DE)
(86) Internationale Anmeldenummer: EP9101038
(87) Internationale Veröffentlichungsnummer: WO9120080

(56) Entgegenhaltungen:
- EP-A-00 341 852
- WO-A-80/9031
- US-A- 4 700 240
- US-A- 4 777 542
- IEEE TRANSACTIONS ON MAGNETICS.vol.MAG22, No.5, Sept. 1986, NEW YORK US pages 1179-1181; R.A. BAUGH et al.:"EXTREMELY LOW ERROR RATE DIGITAL RECORDING WITH AHELICAL SCAN RECORDER " see page 1180, left-hand column, lines 7-32; fig. 8-13
- PATENT ABSTRACTS OF JAPANvol. 10, no. 160 (P-465)(2216) 07 June 1986, & JP-A-61 013476 (NIPPON DENSHIN DENWA KOSHA) 21 January 1986, see whole document
- HEWLETT-PACKARD OURNAL; VOL: 36; NO:*; March 1985, PALO ALTO US, pages 19-24; J.L. SHAFER: "DIGITAL FORMATTING AND CONTROL ELECTRONICS FOR HALF-INCH TAPE DATA STORAGE"

## Beschreibung

Die Erfindung geht aus von einem Recorder für digitale Signale gemäß dem Oberbegriff des Anspruchs 1. Ein derartiger Recorder ist z.B. als sogenannter R-DAT (rotational digital audio tape)-Recorder bekannt.

Für die Verarbeitung serieller Datensignale in einem Recorder sind Synchronisierschaltungen zur Regenerierung des Bit-, Wort- und Blocktaktes erforderlich. Datensignale, die von der Abtastung einer Aufzeichnung in unterteilten Spuren stammen, haben im allgemeinen ein Einlaufsignal am Anfang und ein Auslaufsignal am Ende jeder Spur. Diese Signalbereiche sollen vor allem verhindern, daß das eigentliche Datensignal durch Ungleichmäßigkeiten am Anfang und Ende des Band/Kopf-Kontaktes beeinträchtigt wird. Während des Einlaufsignals soll außerdem die Synchronisierung hergestellt werden, da diese durch den Kopfwechsel verlorengeht.

In der DE-OS 35 33 962 wird ein besonderes Einlaufsignal beschrieben, das Informationen zur Herstellung der Blocksynchronisierung und zur Ermittlung des Beginns der Datenübertragung enthält. Die Erzeugung und Auswertung dieses Einlaufsignals erfordert einen zusätzlichen Schaltungsaufwand. Der Auswertschaltung zur Erzeugung der Blocksynchronisierung wird am Beginn jeder Spur ein Startsignal z.B. von der Kopfumschaltung zugeführt.

Der Erfindung liegt die Aufgabe zugrunde, die Synchronisierschaltung zur Erzeugung des Taktes für die Decodierung bei der Wiedergabe zu vereinfachen.

Diese Aufgabe wird durch die im Anspruch 1 angegebene Erfindung gelöst. Vorteilhafte Weiterbildungen der Erfindung sind in den Unteransprüchen angegeben.

Für die Herstellung der Blocksynchronisierung während des Einlaufsignals ist dann keine besondere Schaltung mehr erforderlich. Es kann dieselbe Schaltung verwendet werden, die im Datenbereich die Blocksynchronisierung aufrechterhält. Diese Aufrechterhaltungsschaltung wird, z.B. bei einem Drop-Out neu gestartet, wenn für eine bestimmte Zeit kein Synchronsignal in den Bereich eines periodisch geöffneten Zeitfensters fällt. Infolge der fehlenden Synchronsignale im Auslaufsignal wird die Schaltung auch am Beginn jedes Einlaufsignals automatisch gestartet und damit die Herstellung der Blocksynchronisierung im Einlaufbereich eingeleitet. Die Zuführung eines besonderen Startsignals am Beginn jeder Spur, z.B. von der Kopfumschaltung, ist nicht mehr erforderlich.

Die Schaltung erkennt somit im Auslaufsignal das abweichende Bitmuster nicht mehr als Synchronsignal. Die Art der Abweichung des Bitmusters von dem vereinbarten Bitmuster ist grundsätzlich beliebig. Es hat für die Synchronisierung keine Funktion mehr, da während des Auslaufsignals die Spur ohnehin beendet ist und die Synchronisierung zu Beginn der neuen Spur neu eingeleitet werden muß. Ein weiterer Vorteil besteht darin, daß in der Synchronisierschaltung bereits vorhandene Schaltungsteile wie z.B. Zähler verwendet werden können, um rechtzeitig die am Spuranfang erforderlichen Maßnahmen einzuleiten. Die Kopfumschaltspannung braucht der Synchronisierschaltung nicht zugeführt zu werden. Die Schaltungsvereinfachung besteht also auch darin, daß bei einem integrierten Schaltkreis ein Anschluß (Pin) oder auf einer Schaltungsplatine eine Leiterbahn eingespart wird.

Die US-A-4 777 542 zeigt gleiche Synchronisationsmuster (2, 4) im Einlaufsignal und in den Datenblöcken 3. Ferner erfolgt die Auswertung ebenfalls derart, daß die Synchronisation nur durchgeführt wird bis eine bestimmte Anzahl gültiger Synchronisationen durchgeführt worden sind, und daß die Synchronisation jedoch wieder aufgenommen wird, wenn ein Synchronisationsmuster nicht festgestellt werden kann.

Auslaufsignale werden in der US-A-4 777 542, das keinen R-dat-Recorder mit unterteilten Spuren betrifft, nicht erwähnt. Die nach der Erfindung erreichte Schaltungsvereinfachung, bei der ein Anschluß zur Zuführung der Kopfumschaltspannung eingespart wird (s. S. 2, letzter Abs.), kann nach US-A-4 777 542 damit nicht auftreten, denn US-A-4 777 542 betrifft eher eine Floppy Disk-Steuerung.

Die Erfindung wird im folgenden anhand der Zeichnung erläutert. Darin zeigen
- Fig. 1: das Signalformat eines Datenblocks,
- Fig. 2: das Signalformat einer Spur und
- Fig. 3: ein Blockschaltbild für die Synchronisierung.

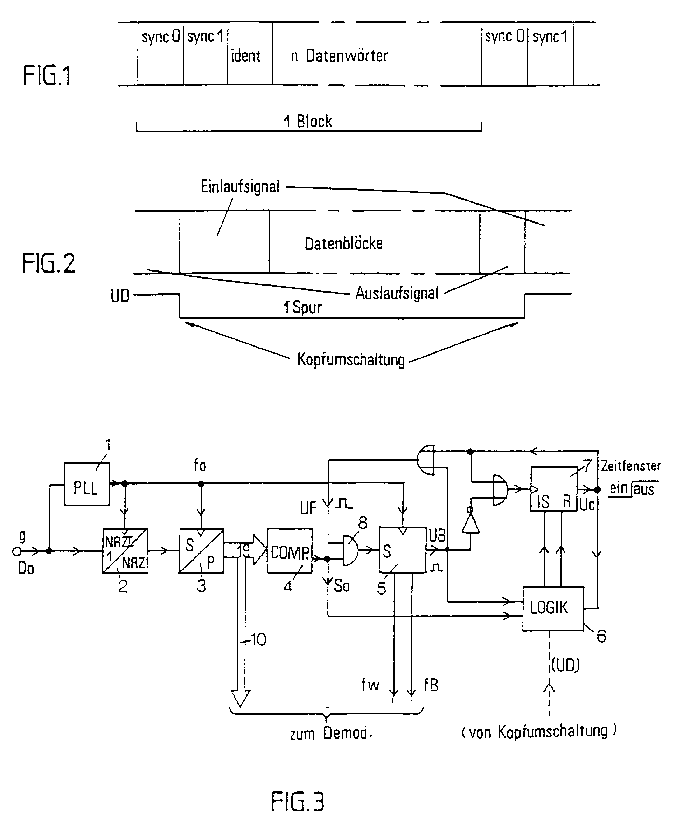

Fig. 1,2 zeigen ein Signalformat für ein Schrägspuraufzeichnungsgerät für Digitalsignale. Da für die Übertragung eine 8/10-Modulation vorgesehen ist, besteht jeder Datenblock aus (3+n)*10 Bit, wobei jeweils 2*10 Bit ein festgelegtes Muster bilden, das zur Synchronisierung dient. Die 10 Bit ident geben die Datenblocknummer an. Darauf folgen n*10 Bit Datensignal. Jede Spur der Aufzeichnung enthält am Beginn das Einlaufsignal, in der Mitte die Datenblöcke und am Ende das Auslaufsignal. Das Ein- und Auslaufsignal besteht meist aus einer 0101-Folge. Es kann aber auch jedes andere Bitmuster, das genügend viele Pegelübergänge enthält, verwendet werden. Erfindungsgemäß enthält nur das Einlaufsignal dem Datensignal entsprechenden Synchronsignale. Meist sind die Synchronmuster polaritätsunabhängig, indem sie durch das Vorhandensein und Nichtvorhandensein von Pegelübergängen gekennzeichnet sind (NRZI-Codierung).

Fig. 3 zeigt das Prinzipschaltbild einer Synchronisierschaltung für das Signalformat gemäß Fig. 1,2. Diese Schaltung dient zunächst zur Aufrechterhaltung der Synchronisierung, nachdem die Wort- und Blocksynchronisierung während des Einlaufsignals hergestellt wurde. Das durch Abtastung und Signalentzerrung von einem Aufzeichnungsträger gewonnene Signal Do wird dem Eingang der Schaltung an der Klemme 9 zugeführt. Mit Hilfe der PLL-Schaltung 1 wird der Bittakt fo hergestellt. Wenn Do ein NRZI-Signal ist, erfolgt in der Stufe 2 die Umwandlung in das NRZ-Signal. Das mit fo getaktete Schieberegister 3 liefert mit jedem Takt die letzten 19 aufeinanderfolgenden Bit an die 19 parallelen Eingänge des Komparators 4, der zur Erkennung des Synchronmusters dient. Beim Erkennen des Synchronmusters gibt der Komparator 4 einen Impuls So von der Dauer eines Bits ab. Dieser Impuls stellt den Zähler 5, der zur Erzeugung des Worttaktes fw und des Blocktaktes fB dient, auf eine definierte Zählphase ein. Sofern der Impuls So von einem richtig erkannten Synchronmuster stammt, gewährleisten die Taktsignale fw und fB die korrekte Weiterverarbeitung des Datensignals, das auf 10 parallelen Leitungen vom Schieberegister 3 dem 8/10-Demodulator zugeführt wird.

Würde die PLL-Schaltung ständig den korrekten Bittakt liefern, brauchte der Synchronisiervorgang nur einmal am Beginn jeder Spur durchgeführt zu werden. Danach könnte der Zähler 5 mit dem Bittakt störungsfrei weiterlaufen. Die Übertragung der Synchronmuster im Datenbereich wäre dann überflüssig. Beim Auftreten von Drop-outs besteht jedoch die Gefahr, daß der spannungsgesteuerte Oszillator VCO in der PLL-Schaltung während der Dauer des Drop-out ein oder mehrere Schwingungen zu viel oder zu wenig erzeugt. Danach ist der Zähler 5 nicht mehr in der richtigen Zählphase, so daß die korrekte Signalverarbeitung für den Rest der Spur unmöglich ist, wenn keine Nachsynchronisierung des Zählers 5 erfolgt.

Selbst wenn das Sync-Muster so gewählt ist, daß es im übrigen Signal nicht vorkommt, besteht die Gefahr, daß infolge von Bitfehlern ein Sync-Muster vorgetäuscht wird, das dann den Zähler 5 in eine falsche Zählphase bringt, die erst beim nächsten ungestörten regulären Sync-Muster korrigiert wird. Um derartige Störungen zu vermeiden, wird der Impuls So dem Synchronisiereingang des Zählers 5 über das UND-Gatter 8 zugeführt, das als Zeitfenster dient. Der Fensterimpuls UB bzw. UF hat die Blockfrequenz. Bei richtiger Phaseneinstellung des Zählers 5 liegt der Impuls So etwa in der Mitte des Fensterimpulses. Die Dauer des Fensterimpulses hängt vom verwendeten Sync-Muster und von der Größe der zu erwartenden Bit-Slips ab. Ein Sync-Muster von n Bit Länge kann z.B. so gewählt werden, daß die Vortäuschung eines um ±n/2 Bit verschobenen Musters durch eine Störung möglichst unwahrscheinlich ist. Im vorliegenden Fall darf dann das Zeitfenster für die Nachsynchronisierung des Zählers 5 eine Breite von 20 Bit haben, so daß Bitslips von bis zu ±10 Bit durch das nächste ungestörte Sync-Signal korrigiert werden.

Bei dieser Schaltung sind zwei Forderungen zu erfüllen:
1. Das Zeitfenster muß bei Beginn jeder Spur unwirksam sein, da nach dem Kopfwechsel So wahrscheinlich nicht mehr im Bereich des Fensters liegt.
2. Das Fenster muß nach jedem Bitslip, durch den So aus dem Bereich des Fensters gerät, unwirksam werden, damit der Ausgleich des Bitslips ermöglicht wird.

Zur Erfüllung dieser Forderungen dienen die Logikschaltung 6 und der Zähler 7. Zu Beginn jeder Spur ist die Spannung Uc am Ausgang des Zählers 7 auf High-Pegel oder "1". Dadurch ist das Gatter 8 nicht als Zeitfenster wirksam, so daß jeder Impuls So die Zählphase des Zählers 5 einstellt. Die Logikschaltung 6 enthält einen Zähler, der mit der ansteigenden Flanke der Spannung Uc gestartet wird. Dieser Zähler wird außerdem jedesmal zurückgesetzt, wenn während der Dauer des Impulses UB kein Impuls So auftritt. Der Zähler zählt also die in unterbrochener Folge in das Zeitfenster fallenden Impulse So. Sobald zwei aufeinanderfolgende Impulse So im Zeitfenster lagen, wird der Zähler 7 zurückgesetzt. Das bedeutet, daß die Spannung Uc auf Low-Pegel oder auf den Wert "0" geht. Dadurch wird das Gatter 8 als Zeitfenster wirksam.

Der Zähler 7 zählt von nun an die Impulse UB. Er wird jedoch von jedem Impuls So, der in das Zeitfenster fällt, zurückgesetzt. Den Endstand, d.h. Uc="1" kann der Zähler 7 nur dann erreichen, wenn während einer vorgegebenen Zahl m, z.b. m=12, von Impulsen UB kein Impuls So in das Zeitfenster fällt. In diesem Fall ist anzunehmen, daß ein Bitslip aufgetreten ist, das so groß war, daß die Impulse So nicht mehr in das Zeitfenster fallen.

Der Zähler 7 sorgt also dafür, daß die Forderung Nr. 2 erfüllt wird. Um die Forderung Nr. 1 zu erfüllen, wird der Zähler 7 am Beginn jeder Spur auf Uc="1" gesetzt. Das dafür erforderliche Signal wurde bisher aus der Kopfumschaltspannung UD gewonnen, die zu diesem Zweck der Logikschaltung 6 zugeführt werden mußte.

Diese Zuführung und der Aufwand für das Setzen des Zählers 7 auf Uc="1" können eingespart werden, wenn erfindungsgemäß das Einlaufsignal Sync-Muster enthält und das Auslaufsignal keine Sync-Muster enthält. In diesem Fall ist sichergestellt, daß der Zähler 7 etwa am Spurende automatisch auf Uc="1" geht. Die Wirkung der Kopfumschaltspannung ist also im vollen Umfang ersetzt. Die Zuführung dieser Spannung ist nicht mehr erforderlich.

Bei dem in der DE-OS 35 33 962 beschriebenen Verfahren ist für die Auswertung der Sync-Information des Einlaufsignals eine besondere Schaltung erforderlich. Das dort angegebene Einlaufsignal enthält zusätzlich eine Information für die Vorausbestimmung des Beginns des ersten Datenblocks. Diese Information kann beim erfindungsgemäßen Verfahren durch geeignete Wahl der Ident-Wörter im Einlaufsignal realisiert werden. Wenn z.B. zum Zählen der Datenblöcke der Spur ein Modulo-Zähler verwendet wird, dann sind die Ident-Wörter im Einlaufbereich so zu wählen, daß jedes dieser Wörter den Zähler so setzt, daß dieser Zähler durch Weiterzählen der Blökke bei Beginn des ersten Datenblocks auf Null steht. Die sichere Bestimmung des ersten Datenblocks nach dem Einlaufsignal erfordert dann ebenfalls keinen zusätzlichen Schaltungsaufwand mehr.

## Patentansprüche

1. Recorder zur auf eine Vielzahl von Spuren unterteilten Aufzeichnung von digitalen Signalen, wobei die Länge jeder Spur gering ist gegenüber der Länge des Magnetbandes, mit Mittel zur Aufzeichnung eines Einlaufsignals am Spuranfang und eines Auslaufsignals am Spurende und von in regelmäßigen Abständen angeordneten Synchronsignalen für die Markierung der Datenblöcke, die in dem zwischen Einlaufsignal und Auslaufsignal liegenden Spurbereich angeordnet sind,**dadurch gekennzeichnet**, daß im Einlaufbereich die gleichen Synchronsignale wie im Datenbereich und im Auslaufbereich keine entsprechenden Synchronsignale aufgezeichnet werden, so daß die Bitmuster des Auslaufsignals im Zeitbereich der Synchronsignale vom Bitmuster der Synchronsignale abweichen.

2. Recorder nach Anspruch 1, **dadurch gekennzeichnet,** daß im Einlaufbereich außerdem Ident-Wörter aufgezeichnet werden, die so gewählt sind, daß ein Zähler zum Zählen der Datenblöcke durch jedes dieser Ident-Wörter so gesetzt werden kann, daß durch Weiterzählen mit der Datenblockfrequenz bei Erreichen des Datenblockbereiches der Zählabstand der Nummer des jeweiligen Datenblocks entspricht.

3. Wiedergabeschaltung für mit einem Recorder nach Anspruch 1 oder 2 aufgezeichneten digitalen Signal, mit einem Zähler (5) zur Erzeugung der Datenblockfrequenz (fB), dessen Zählphase durch die Synchronsignale (So) eingestellt wird, **dadurch ge****kennzeichnet**, daß eine Schaltung (8) vorgesehen ist, die die Synchronsignale für die Synchronisierung des Zählers (5) nur während der Dauer eines Zeitfensters (UF) wirksam macht, daß das Zeitfenster abgeschaltet wird, und die Synchronsignale damit zur Synchronisierung jederzeit wirksam werden, wenn für eine bestimmte Zeit keine Synchronsignale in das Zeitfenster gefallen sind, und daß das Zeitfenster wieder eingeschaltet wird, nachdem zwei oder mehr Synchronsignale (So) im Bereich des Zeitfensters festgestellt wurden.

4. Wiedergabeschaltung für einen Recorder nach Anspruch 2, mit einem Zähler zum Zählen der Datenblöcke, **da****durch gekennzeichnet**, daß der Zähler (5) bereits während des Einlaufsignals auf die der Numerierung der Datenblöcke entsprechende Zählphase eingestellt wird.

## Claims

1. Recorder for recording digital signals subdivided over a plurality of tracks, wherein the length of each track is short compared with the length of the magnetic tape, including means for recording a run-in signal at the start of a track and a run-out signal at the end of a track and for the recording of synchronising signals which are arranged at regular intervals and which are for the marking of the data blocks which are arranged in the regions of the track located between the run-in signal and the run-out signal, characterised in that, the same synchronising signals as in the data region are recorded in the run-in region and no corresponding synchronising signals are recorded in the run-out region so that the bit patterns of the run-out signal in the time region of the synchronising signals deviate from the bit pattern of the synchronising signals.

2. Recorder in accordance with Claim 1, characterised in that, ident words are also recorded in the run-in region, which words are selected such that a counter for counting the data blocks can be set by each of these ident words such that, by continuing to count at the data block frequency, the counting interval upon reaching the data block region corresponds to the number of the relevant data block.

3. Reproduction circuit for digital signals recorded by a recorder in accordance with Claim 1 or 2 including a counter (5) for generating the data block frequency (fB) whose counting phase is set by the synchronising signals (So), characterised in that, there is provided a circuit (8) which makes the synchronising signals effective for synchronising the counter (5) only during the period of a timing window (UF), that the timing window is switched off and the synchronising signals thus become ineffective for the purposes of synchronisation on each occasion that no synchronising signals have fallen in the timing window for a specific time and that the timing window is switched on again after two or more synchronising signals (So) have been detected in the region of the timing window.

4. Reproduction circuit for a recorder in accordance with Claim 2 including a counter for counting the data blocks, characterised in that, the counter (5) is set during the run-in signal to the counting phase corresponding to the numbering of the data blocks.

## Revendications

1. Enregistreur destiné à l'enregistrement de signaux numériques subdivisé en un grand nombre de pistes, où la longueur de chaque piste est minime par rapport à la longueur de la bande magnétique, avec des moyens d'enregistrement d'un signal d'entrée en début de piste et d'un signal de sortie en fin de piste, et d'enregistrement de signaux de synchronisation agencés à intervalles réguliers, destinés à marquer les blocs de données qui se trouvent dans la zone de pistes située entre le signal d'entrée et le signal de sortie, caractérisé en ce que, dans la plage d'entrée les mêmes signaux de synchronisation sont enregistrés que dans la plage des données, et que dans la plage de sortie, il n'y pas d'enregistrement de signaux de synchronisation correspondants, de sorte que les configurations binaires du signal de sortie divergent dans la plage de temps des signaux de synchronisation de la configuration binaire des signaux de synchronisation.

2. Enregistreur selon la revendication 1, caractérisé en ce que, dans la plage d'entrée, des mots d'identification sont enregistrés et sélectionnés de sorte qu'un compteur destiné à compter les blocs de données peut être réglé, par chacun de ces mots d'identification, de telle sorte que, par poursuite du comptage avec la fréquence de bloc de données, l'intervalle de comptage corresponde au numéro du bloc de données respectif, lorsque la plage du bloc de données est atteinte.

3. Circuit de lecture pour un signal numérique enregistré avec un enregistreur selon la revendication 1 ou 2, avec un compteur (5) destiné à générer la fréquence de bloc de données (fB), dont la phase de comptage est réglée par les signaux synchrones (So), caractérisé en ce qu'il est prévu un circuit (8) qui ne rend actifs les signaux de synchronisation du compteur (5) que pendant la durée d'une fenêtre de temps (UF), que la fenêtre de temps est désactivée et que les signaux de synchronisation sont donc activés à tout moment aux fins de synchronisation, si, pendant une période déterminée, aucun signal de synchronisation n'est tombé dans la fenêtre de temps, et que la fenêtre de temps est de nouveau activée après que deux signaux synchrones (So) ou plus ont été déterminés dans la zone de la fenêtre de temps.

4. Circuit de lecture pour un enregistreur selon la revendication 2, avec un compteur destiné à compter les blocs de données, caractérisé en ce que le compteur (5) est réglé, dès le signal d'entrée, sur la phase de comptage correspondant à la numérotation des blocs de données.
